# EUROPEAN PATENT APPLICATION

(11) **EP 3 118 168 A1**
(43) Date of publication of application: **18.01.2017**
(21) Application number: 15762287.9
(22) Date of filing: 11.03.2015
(51) Int. Cl.: C02F 3/32

(54) **DEVICE AND METHOD FOR PURIFYING WASTEWATER USING AQUATIC PLANTS**

(30) Priority: 12.03.2014 ES 201400197
(71) Applicant: Torres Junco, Vicente, 28794 Guadalix de la Sierra (Madrid) (ES)
(72) Inventor: Torres Junco, Vicente, 28794 Guadalix de la Sierra (Madrid) (ES)
(74) Representative: Garcia-Cabrerizo y del Santo, Pedro Maria
(86) International application number: PCT/ES2015/070174
(87) International publication number: WO 2015/136140

(57) **Abstract**

Device for purifying wastewater using aquatic plants, consisting of a mesh (9) inside which the aquatic plants and a series of floating buoys (4) are secured, to which buoys the mesh (9) is to be attached, said buoys being filled with a fluid less dense than water and configured to enable the mesh (9) to support a weight of at least 5 kg/m² without sinking. The purification method is based on the use of said device, to which helophyte plants are attached, their system of stems and leaves emerging at the surface of the water surface being maintained in order to increase oxygen transfer from the rhizome system of the plants to the water.

## Description

### Technical field of the invention

The present invention relates to a device and method for purifying wastewater or contaminated water using aquatic plants, such as floating helophyte plants.

### Background of the invention

The method for planting and growing plants on the water surface without the need of soil is being widely used in the purification of wastewater and polluting discharges. Among the plants used for such purpose are the helophyte plants.

Under the word helophytes, also called emergent macrophytes, there is included a series of amphibian perennial plants the persistent organs of which are rooted at the bottom of wetlands with their stems emerging and developing leaves and flowers in the air environment. These plants have the ability to transport the air oxygen from the emerged parts to the roots through a special tissue called aerenchyma. The excess of oxygen that roots do not need is used by the microorganisms living in the rhizosphere of these plants to breathe and thus degrade the surrounding organic matter, this being a natural way of purifying the water in natural wetlands and ditches, streams and rivers that receive wastewater.

Helophyte plants have shown a great capacity for purifying wastewater. They regenerate water without consuming energy or produce sludge, thus providing robust and sustainable industrial and urban cleansing solutions. Therefore, they offer important advantages over other traditional treatments, especially because of their energy efficiency and also their low and simple maintenance requirements.

There are some known methods employing floating macrophyte plants for water purification, for example, the one described in patent ES2120388 B1, which relates to the use of emergent macrophyte plants forming a mat or mantle floating on the water surface.

Moreover, document ES2324277 discloses a continuous mat of helophyte plants with ballast for semi-submerged use in the purification of wastewater.

The disadvantage of the systems described so far in water purification using macrophyte or helophyte plants is that these plants sink as they grow, due to the increased weight of their air biomass. Their sinking makes that their purifying capacity decreases or stops, and can even lead to the death of the plant. The same occurs with the method of the semi-submerged plants.

For example, the helophyte plants of the genus *Typhas,* fully developed and placed upright vertically stable floating on the water surface, submerge the base of their leaves into water at about 25 cm long, thus minimizing the transfer of oxygen to water in more than 61%.

For this reason, the present invention discloses a new device which allows maintaining the plants in hyperflotation, i.e. with their system of leaves and stems floating on the water and only keeping submerged, close to the water surface, their rhizomes and roots. The method based on the use of this device allows increasing the supply of oxygen to the water by plants, thus favoring their capacity of degradation of the organic matter present in the water, in addition to avoiding their death by sinking to anoxic areas where they cannot transfer oxygen.

### Description of the invention

The device for purifying wastewater by using aquatic plants of helophytic type comprises a mesh which is maintained in flotation through a series of floating buoys to which the mesh is attached. Said floating buoys are filled with a fluid less dense than water (air, hydrogen, etc.) and are configured to enable the mesh to support a weight of at least 5 Kg/m². The material which forms the mesh may be more or less dense than water, since its weight is supported by the buoys. The helophyte plants are attached to the mesh with cable ties, wires or any other similar elements.

Among the helophyte plants used are the cattails (genus *Typha*), nut-grasses (genus *Cyperus*), bur-reed (genus *Sparganium*), sedges (genus *Juncus*), and papyrus (genus *Cyperus).*

The method of the present invention is based on the use of the device described above, to which the helophyte plants that are maintained in hyperflotation are attached, that is, always keeping their system of stems and leaves emerging, out of the water, and only having their rhizome system submerged in water.

In general, in order to carry out the purification method, the described device is firstly placed on the water surface and then the plants are placed on or attached to it.

The buoys support the weight of the constituent material of the mesh and the aerial parts (leaves, stems) of the plants that grow associated or linked to it. The rhizome system of plants is always kept submerged and as close as possible to the water surface to be depurated, resulting in an increase of over 67% in the transfer of oxygen to the water, as the isostatic oxygen difference between the air and rhizome systems is at its maximum. The mesh sustained by the buoys can support the weight of the stems and leaves of the helophyte plants even at their maximum degree of development, without them sinking the junction of their leaves with the rhizome system below the level of the water surface. Only their rhizome system is maintained underwater and as close to the water surface as possible. The rhizome system does not transfer weight to the mesh as its density tends to be that of the water.

The increase in the oxygen transferred to the water for the degradation of organic matter, is achieved through the inherent ability of the structure of the helophyte plants, the difference of isostatic pressure between the pressure of oxygen dissolved in the air and the environment in which the system of rhizomes and roots (the rhizosphere) is. The interaction with aerobic microorganisms, which capture the oxygen supplied by plants, occurs in the rhizosphere.

The transfer of oxygen to the water by the helophyte plants is a function of the difference of oxygen concentration in contact with the leaves (air always tends to 21% at sea level) and the depth to which rhizomes are submerged in water, which can be 0%, and the internal resistance of the plants to the passage of oxygen by their spongy parenchyma or aerenchyma (which produces a pressure loss of 0.35-0.4 atmospheres). In the present invention, the rhizome system is forced to always stay as close to the water surface as possible, without descending to a depth greater than 0.65 meters from the water surface to be kept in the oxic environment created by the transfer of oxygen from the rhizome or root into the water that bathes its exterior. Around 0.65 m deep, the plant cannot deliver oxygen by its rhizome system for not having it in its internal vessels, so that the bacteria of decay, which always live under anoxic conditions, will come to contact with the surface of the plants passing to their interior and decomposing the same.

### Description of the figures

In order to complete this description and give a better understanding of the invention, a set of drawings, illustrative and not limiting, is attached, representing the following:
Figure 1 shows a plan view of the device of the present invention.
Figure 2 shows a section of Figure 1 by II-II in which helophyte plants have been placed.

The different references in said figures have the following meanings:
- 1.-: Leaf of a helophyte plant
- 2.-: Rhizome of a helophyte plant
- 3.-: Water surface
- 4.-: Floating buoy
- 5.-: Fluid conductor pipe
- 6.-: Fluid accumulating tank
- 7.-: Ribs
- 8.-: Clamping element
- 9.-: Mesh
- 10.-: Nodes

### Detailed description of a preferred embodiment

To help understand better what has been described above, a preferred embodiment of the invention based on the figures presented is outlined below.

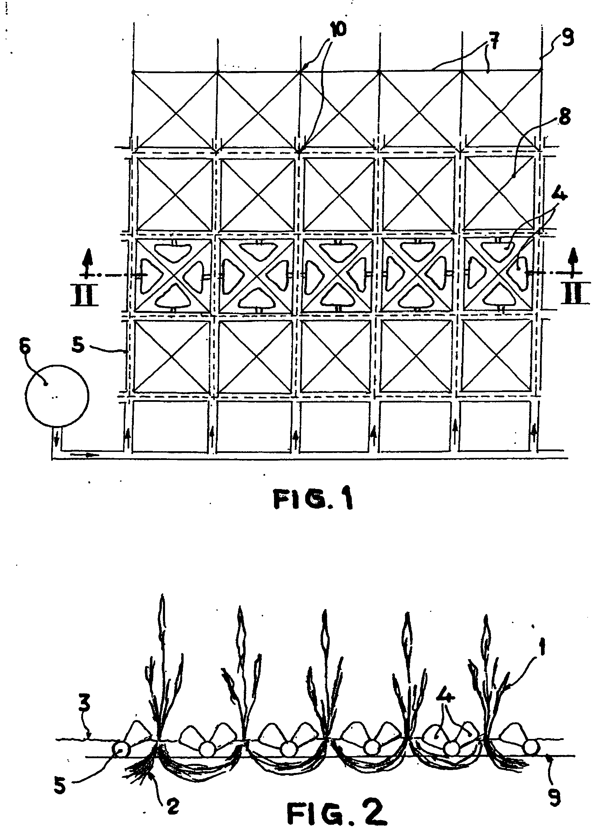

The device used for purifying contaminated or wastewater, whether urban, industrial, mining, etc., comprises a mesh (9) to which the helophyte plants are secured, said mesh (9) is kept floating by means of the floating buoys (4) to which it is attached. The buoys (4) are filled with a fluid less dense than water, such as air, hydrogen, etc., thereby maintaining the entire system of stems and leaves (1) of the plants on the water surface (3), with only their rhizomes (2) and roots remaining submerged (see figure 2).

As seen in Figure 1, the mesh (9) is formed by ribs (7) that cross each other to form nodes (10) of the mesh. In order to maintain the structure of the mesh (9) and prevent it from getting deformed, rigid clamping elements (7) which connect noncontiguous nodes (10) of the mesh (9) can be placed.

The buoys (4), in turn, are connected to a fluid accumulator tank (6) by means of conductor pipes (5) inside which the fluid less dense than water circulates from the accumulator tank (6) to the buoys (4), so that the buoys can filled as much as necessary to maintain the system of stems and leaves (1) of the helophyte plant emerging. In Figure 1 the direction followed by the fluid from the accumulator tank (6) to the buoys (4) is shown with arrows. Figure 1 shows some of the buoys (4) only, but there may be more buoys according to the needs.

The mesh (9) attached to the buoys (4) is preferably configured for supporting at least 14kg/m², which is possible, for example, by inflating the buoys (4) with hydrogen or helium.

For the specific case of plants of the genus *Typhas,* it is known that the density of the rhizomatic set is virtually equal to that of water, so the rhizome system tends to remain stable and submerged in the water, without sinking the helophyte plant.

In the maximum plant development, the aerial part of the plants (stems and leaves) in green state can weigh up to 12 kg/m², so that the mesh (9) could easily support their weight, maintaining the same in constantly floating, without them sinking, during the dormant period ("dry leaves") their weight would be about 3 Kg/m².

It is known that if a set of a fully-developed (rhizomes, roots and leaves) helophyte plant of the genus *Typha* is taken and inserted vertically into the water, it begins to float when the leaves are submerged 24-28 cm long, depending on the depth of the level of development achieved. As the plant sinks, injection of oxygen by rhizomes and roots decreases, as the isostatic pressure in the rhizome system increases, which causes decreased oxygen transfer to water by the helophyte.

The maximum oxygen transfer (100%) will be achieved when the leaf system (leaves) of the plant is maintained above the water level, so that the floating system has to fully support the weight of the aerial biomass that the helophyte is capable of producing, i.e. a weight around 12 kg/m².

In a device as the one described, capable of supporting the weight of the leaf system (leaves) of the helophyte, the rhizome system will not go down to more than 40 cm from the water surface and the oxygen transfer will reach a 100% capacity. If the bearable weight of the floating system is lower, the rhizome system may go down to 65 cm and the transfer of oxygen at this depth will decrease to 0%. From this depth the helophyte will not live, as it would be attacked by anaerobic bacteria.

The mathematical expression indicating the improved transfer efficiency of O₂ to water is a function of depth: (25-h) x4

x% of oxygen transfer = (25- h) x 4, where h is the depth to which the base of the leaves has sunk in cm.

Thus, for h = 25 cm, the % 02 transfer would be: (25-25)% = 0%O₂, i.e. there would not be oxygen transfer.

For h = 10.0 cm, the % 02 transfer would be: (25-10) x4 = 60%;

For h over 25 cm, the% the result is negative and the area that sunk more than 65 cm will rot.

For h = 0 cm, the 02 transfer by the rhizospheric system would be: (25-0)x4 = 100%.

For a sinking of 15 cm, the oxygen transfer would be: (25 -15)x4 = 40%

By the method of the present invention that allows keeping the leaves and stems of the helophyte plant above the water level, the maximum efficiency of water purification is achieved by increasing the oxygen transfer efficiency, so that the number of bacteria that can live per unit of volume will also be the maximum.

## Claims

1. Device for purifying wastewater using aquatic plants **characterized in that** it comprises:
- A mesh (9) to which the aquatic plants are secured and
- A series of floating buoys (4) to which the mesh (9) is attached, said buoys being filled with a fluid less dense than water and configured to enable the mesh (9) to support a weight of at least 3 kg/m² without sinking.

2. Device for purifying wastewater using aquatic plants according to claim 1, **characterized in that** it comprises a fluid accumulator tank (6) and some conductor pipes (5) which communicate said tank with the floating buoys (4).

3. Device for purifying wastewater using aquatic plants according to claim 1, **characterized in that** the mesh (9) is formed by ribs (7) that cross each other to form nodes (10) and includes rigid clamping elements (8) which connect noncontiguous nodes (10) of the mesh.

4. Device for purifying wastewater using aquatic plants according to claim 1, **characterized in that** the fluid less dense than water with which the buoys (4) are filled is air, hydrogen or helium.

5. Device for purifying wastewater using aquatic plants according to claim 1, **characterized in that** the buoys (4) filled with a fluid less dense than water are configured to enable the mesh (9) to support a weight of at least 14 kg/m² without sinking.

6. Method for purifying wastewater and contaminated water **characterized in that** it uses helophyte plants placed on a device as the one described in any of the preceding claims and filling the buoys until maintaining the system of stems and leaves (1) emerging on the water surface (3).

7. Method for purifying wastewater and contaminated water according to claim 6 **characterized in that** the plants used are cattails (genus *Typha*), nut-grasses (genus *Cyperus*), bur-reed (genus *Sparganium*), sedges (genus *Juncus*), and papyrus (genus *Cyperus).*
